# EUROPEAN PATENT APPLICATION

(11) **EP 3 572 686 A1**
(43) Date of publication of application: **27.11.2019**
(21) Application number: 19176630.2
(22) Date of filing: 24.05.2019
(51) Int. Cl.: F16F 9/02

(54) **LIFTING MECHANISM**

(30) Priority: 24.05.2018 CN 201810509575
(71) Applicant: Xiamen Solex High-Tech Industries Co., Ltd., Xiamen Area of China (Fujian) Pilot Free Trade Zone (CN)
(72) Inventor: WANG, Mingnan, Xiamen Area of China (Fujian) Pilot Free Trade Zone (CN); HONG, Chunije, Xiamen Area of China (Fujian) Pilot Free Trade Zone (CN); CHEN, Wenxing, Xiamen Area of China (Fujian) Pilot Free Trade Zone (CN); ZHU, Canhui, Xiamen Area of China (Fujian) Pilot Free Trade Zone (CN)
(74) Representative: Lang, Christian

(57) **Abstract**

Disclosed is a lifting mechanism comprising: a first connecting member (1) and a second connecting member (2); a part of the first connecting member (1) is inserted into the second connecting member (2) and forms a movable connection with the second connecting member (2) in the axial direction; and a force balancing member (3) disposed on the first connecting member (1) and the second connecting member (2); when the first connecting member (1) is moved by an external force F1 in a direction away from the second connecting member (2), the force balancing member (3) provides the first connecting member (1) with an assisting force in the same direction as the moving direction of the first connecting member (1); when the first connecting member (1) is moved by an external force F2 in a direction approaching the second connecting member (2), the force balancing member provides the first connecting member (1) with a resisting force in the opposite direction of movement of the first connecting member (1).

## Description

### Technical field

The present invention relates to a movable mechanism, in particular to a lifting mechanism.

### Related art

The conventional kitchen faucet and basin faucet are mostly integrated faucets, and the water outlet height is fixed and unadjustable. This limitation has caused many inconveniences in many scenes in people's lives. For example, in kitchen faucets, people need to store water or clean in high containers, or open windows due to restrictions on building structure; on the washbasin, people of different heights in the family need to wash their hair and wash their faces, and the old and the children need to take attention to bumps and other scenes. Therefore, if the water outlet on the traditional faucet is adjustable in height and does not need to be held by the human hand, it will be more convenient and more comfortable for people to use. At present, there is also a structure in which the height of the water outlet can be adjusted. One is to use the elastic deformation of a plastic lock catch, and there is a groove on the lifting rod, and when the lock catch is lifted to the groove, it can be stopped. When the lock catch is released, it can be restored, thus achieving height adjustable object. However, the guiding precision is poor, and the adjustment of any height position cannot be satisfied. Another kind of structure is utilizing the frictional resistance between the lifting rod and the outer wall; but due to the influence of the gesture of the lifting process and the gravity of the upper object, the lifting force is large and the downward force is small, resulting in a big difference between the ascending and descending operating forces.

### Summary of the invention

The main technical problem to be solved by the present invention is to provide a lifting mechanism. The force required for the user to operate the lifting mechanism to rise or fall is substantially the same, and the operating feel is relatively good.

Another main technical problem to be solved by the present invention is to provide a lifting mechanism of sanitary device. The force required for the user to operate the lifting mechanism to ascend and descend are substantially the same, and the operating feel is relatively good.

Another main technical problem to be solved by the present invention is to provide a height-adjustable water outlet device equipped with the lifting mechanism as described above.

In order to solve the above technical problems, the present invention provides a lifting mechanism, comprising: a first connecting member and a second connecting member; a part of the first connecting member is inserted into the second connecting member and forms a movable connection with the second connecting member in the axial direction; and
a force balancing member disposed on the first connecting member and the second connecting member; when the first connecting member is moved by an external force F1 in a direction away from the second connecting member, the force balancing member provides the first connecting member with an assisting force in the same direction as the moving direction of the first connecting member; when the first connecting member is moved by an external force F2 in a direction approaching the second connecting member, the force balancing member provides the first connecting member with a resisting force in the opposite direction of movement of the first connecting member.

In another preferred embodiment, the forces F1, F2 that drives the movement of the first connecting member by the assisting force and the resisting force are substantially equal.

In another preferred embodiment, the force balancing member is a negative pressure chamber disposed between an outer side wall of the first connecting member and an inner side wall of the second connecting member, the negative pressure chamber has a pressure relief member at the lower end along the axial direction and a suction member at the upper end along the axial direction; the pressure relief member is linked to the first connecting member, the suction member is fixedly connected to the second connecting member, and the pressure required to open the pressure relief member is smaller than the pressure required to open the suction member.

In another preferred embodiment, when the first connecting member moves in a direction approaching the second connecting member, the pressure relief member moves toward a direction away from the suction member, the volume of the negative pressure chamber becomes larger, the pressure in the chamber is reduced, and the force balancing member provides a resisting force to the first connecting member in a direction opposite to the moving direction of the first connecting member.

In another preferred embodiment, when the first connecting member moves in a direction away from the second connecting member, the pressure relief member moves toward a direction approaching the suction member, the volume of the negative pressure chamber becomes smaller, the air pressure in the negative pressure chamber increases, and the force balancing member provides the first connecting member with an assisting force in the same direction as the moving direction of the first connecting member; when the pressure in the negative pressure chamber reaches the pressure relief threshold, the pressure relief member opens, the gas in the negative pressure chamber flows into the second connecting member, and the force balancing member has no force.

The present invention further provides a lifting mechanism for a sanitary device, wherein comprising: a fixed tube and a movable tube, a part of the movable tube is inserted into the fixed tube and forms a movable connection with the fixed tube along the axial direction; and

a force balancing member disposed on the movable tube and the fixed tube; when the movable tube is moved by an external force F1 in a direction away from the fixed tube, the force balancing member provides the movable tube with an assisting force in the same direction as the movement of the movable tube; when the movable tube is moved by an external force F2 in the direction approaching the fixed tube, the force balancing member provides the movable tube with a resisting force in a direction opposite to the moving direction of the movable tube.

In another preferred embodiment, the forces F1, F2 that drives the movement of the movable tube by the assisting force and the resisting force are substantially equal.

In another preferred embodiment, the force balancing member is a negative pressure chamber disposed between an outer side wall of the movable tube and an inner side wall of the fixed tube, the negative pressure chamber has a pressure relief member at the lower end along the axial direction and a suction member at the upper end along the axial direction; the pressure relief member is linked to the movable tube, the suction member is fixedly connected to the fixed tube, and the pressure required to open the pressure relief member is smaller than the pressure required to open the suction member.

In another preferred embodiment, when the movable tube moves in a direction approaching the fixed tube, the pressure relief member moves toward a direction away from the suction member, the volume of the negative pressure chamber becomes larger, the pressure in the chamber is reduced, and the force balancing member provides a resisting force to the movable tube in a direction opposite to the moving direction of the movable tube.

In another preferred embodiment, when the movable tube moves in a direction away from the fixed tube, the pressure relief member moves toward a direction approaching the suction member, the volume of the negative pressure chamber becomes smaller, the air pressure in the negative pressure chamber increases, and the force balancing member provides the movable tube with an assisting force in the same direction as the moving direction of the movable tube; when the pressure in the negative pressure chamber reaches the pressure relief threshold, the pressure relief member opens, the gas in the negative pressure chamber flows into the fixed tube, and the force balancing member has no force.

In another preferred embodiment, the pressure relief member and the suction member are respectively a second Y-ring and a first Y-ring; the first Y-ring is disposed at an upper end of the negative pressure chamber and fixed to the inner side wall of the fixed tube, and the opening faces the inner side of the negative pressure chamber; the second Y-ring is disposed at the lower end of the negative pressure chamber and is fixed to the outer side wall of the movable tube, and the opening faces the outer side of the negative pressure.

In another preferred embodiment, the inner side wall of the fixed tube is provided with a positioning point, and the outer side wall of the movable tube is disposed with a positioning groove, when the movable tube moves to the highest point along the axial direction, the positioning point is embedded in the positioning groove.

The present invention further provides a height adjustable water outlet device, wherein the water outlet device is equipped with above mentioned lifting mechanism.

In another preferred embodiment, the water outlet device is an integrated faucet, which comprises a faucet mount, an outlet hose and an outlet faucet; wherein the faucet mount is mounted on the upper surface of a mounting surface; the fixed tube is fixedly disposed in the faucet mount, the upper end of the movable tube is fixedly connected with the outlet faucet, and the outlet hose is fixed to an inlet of the outlet faucet after passing through the movable tube.

In another preferred embodiment, the fixed tube is integrally located above the mounting surface, or a part of the fixed tube is located above the mounting surface, and another part is located below the mounting surface; or the fixed tube is entirely located below the mounting surface.

In another preferred embodiment, the water outlet device is a split type faucet, which comprises an outlet control component, an outlet faucet and an outlet hose; the water outlet control component and the outlet faucet are separately disposed on the upper surface of the mounting surface; the mounting surface has a hole for mounting the fixed tube, the upper end of the movable tube is fixedly connected with the outlet faucet, and the outlet hose is fixedly connected to an of the outlet faucet after passing through the movable tube.

In another preferred embodiment, the fixed tube is not exposed to the upper surface of the mounting surface as a whole.

Compared with the prior art, the technical solution of the present invention has the following beneficial effects:
1. The lifting mechanism provided by the present invention overcomes the problem of unbalanced force required by the conventional lifting mechanism during the ascending and descending process, so that the user applies substantially the same force during the process of ascending and descending the lifting mechanism, thereby ensuring the same consistency in operational feel.
2. The lifting mechanism provided by the present invention has no frustration during the lifting process, and the lifting process is smooth.
3. The lifting mechanism of sanitary device of the present invention is provided that, when the movable tube rises to the highest point, the user is promoted by the locking of the positioning groove and the positioning convex point. The convenience of the user operation is further increased, and the user is prevented from excessively pulling the movable tube.
4. The lifting mechanism of sanitary device provided by the present invention can be applied to an integrated faucet or a split faucet, and can be exposed on the mounting surface or hidden in the mounting surface. The compatibility is very good, and it can be perfectly adapted to various drawing faucets and shampoo faucets on the market.

### Brief description of the drawings

FIG. 1 is a force analysis diagram of a lifting mechanism in an ascending process in Embodiment 1 of the present invention;
FIG. 2 is a force analysis diagram of a lifting mechanism in a descending process in Embodiment 1 of the present invention;
FIG. 3 is a structural exploded view of a height-adjustable faucet in Embodiment 2 of the present invention;
FIG. 4 is a force analysis diagram of the height-adjustable faucet in the ascending process in Embodiment 2 of the present invention;
FIG. 5 is a force analysis diagram of the height-adjustable faucet in the descending process of Embodiment 2 of the present invention;
FIG. 6 is a schematic view showing the installation of the height-adjustable faucet in Embodiment 2 of the present invention;
FIG. 7 is a schematic view showing another installation of the height-adjustable faucet in Embodiment 2 of the present invention;
FIG. 8 is a schematic view showing the installation of a height-adjustable faucet in Embodiment 3 of the present invention;
FIG. 9 is a schematic view showing the hidden installation of the fixed tube in Embodiment 3 of the present invention;

### Detailed description of the embodiments

The present invention will be further described below in conjunction with the accompanying drawings and embodiments.

### Example 1

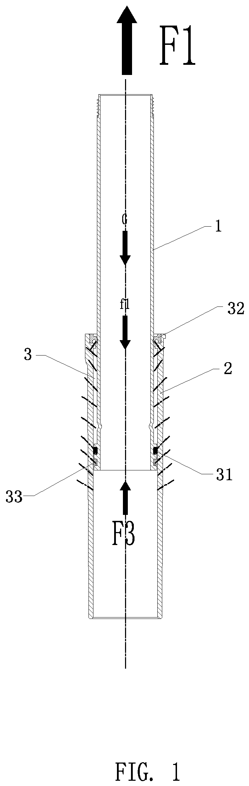

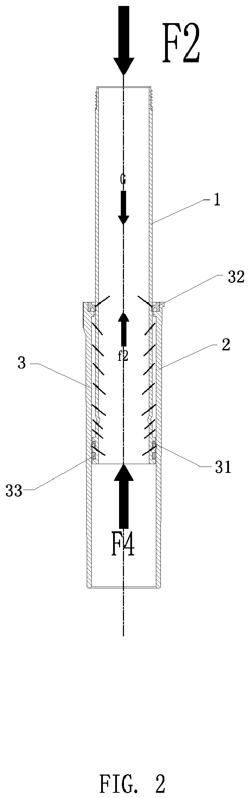

Referring to FIG. 1 and 2, a lifting mechanism comprises: a first connecting member 1 and a second connecting member 2; a portion of the first connecting member 1 is inserted into the second connecting member 2 to form an active connection with the second connecting member 2 along the axis direction; and

a force balancing member 3 disposed on the first connecting member 1 and the second connecting member 2, when the first connecting member 1 is moved by an external force F1 in a direction away from the second connecting member 2, the force balancing member 3 provides the first connecting member 1 with an assisting force in the same direction as the moving direction of the first connecting member 1; when the first connecting member 1 is moved by an external force F2 in the direction approaching the second connecting member 2, the force balancing member 3 provides a resistance force to the first connecting member 1 in a direction opposite to the movement of the first connecting member 1.

Since the force F1 applied is opposite to the direction of the gravity G and the rising motion friction f1 of the first connecting member 1 when the user pulls the first connecting member 1, the gravity G and the rising motion friction f1 of the first connecting member 1 itself need to be overcome. When the user pushes the first connecting member 1 down, the applied force F2 is in the same direction as the gravity G of the first connecting member 1 itself, and the descending process only needs to overcome the lower moving friction f2 of the first connecting member 1. Then, the force F1 (F1=f1+G) required by the user to pull the first connecting member 1 during the ascending process is significantly greater than the downwardly applied force F2 (F2=f2-G). This results in a poor consistency of the user's operating feel and a bad hand feeling. After the above design, during the ascent, the value of F1 (F1=f1+G-F3) can be decreased due to the presence of the assisting force; while in the descending process, due to the existence of the resisting force, F2 (F2= The value of f2-G+F4) can be increased, and finally the values of F1 and F2 are substantially the same, and the consistency and feel of the user operation are greatly increased.

In the present embodiment, the force balancing member 3 is a negative pressure chamber disposed between the outer side wall of the first connecting member 1 and the inner side wall of the second connecting member 2, the negative pressure chamber has a pressure relief member 31 at the lower end and a suction member 32 at the upper end along the axial direction; wherein the pressure relief member 31 is linked with the first connecting member 1 and the suction member 32 is linked with the second connecting member 2, and the pressure required to open the pressure releasing member 31 is lower than the pressure required to open the suction member 32.

With above arrangement, when the first connecting member 1 moves in a direction away from the second connecting member 2, the pressure relief member 31 moves toward the suction member 32, and the negative pressure stored in the negative pressure chamber forms an assisting force F3 to the connecting member 1in a direction away from the second connecting member 2, and as the volume of the negative pressure chamber becomes smaller, the air pressure in the negative pressure chamber becomes larger, and the stored negative pressure continuously decreases, the upwardly assisting force F3 provided by the negative pressure is also continuously decreased until the internal pressure is equal to the external atmospheric pressure and the assisting force F3 disappears. Next, under the action of the external force F1, the volume of the negative pressure chamber continues to decrease, and the pressure inside the chamber continues to increase, when the pressure in the chamber reaches the pressure relief threshold, the pressure relief member 31 opens, the outside air flows into the chamber, and the pressure inside and outside the chamber are equal. Consistently, the first connecting member 1 is supported by the friction of the first connecting member with the suction member, the second connecting member and the retaining ring 33 on the first connecting member.

When the first connecting member 1 moves in the direction of approaching the second connecting member 2, the pressure relief member 31 moves toward the direction away from the suction member 32, the volume of the negative pressure chamber becomes large, and the pressure in the chamber rises from the initial atmospheric pressure begins to decrease, forming a negative pressure chamber; the external atmospheric pressure forms a pressure difference between the suction member 32 and the pressure relief member 31, and the pressure difference generated by the suction member 32 is applied to the second connecting member 2, the direction is the same as the first connecting member 1, and the pressure difference generated by the pressure relief member 31 is applied to the first connecting member 1 in a direction opposite to the moving direction of the first connecting member 1. Therefore, on the first connecting member 1, only the pressure generated by the pressure difference between the inner and outer portions of the pressure relief member 31 is received, and the direction is opposite to the moving direction of the first connecting member 1. Therefore, the formation of the negative pressure chamber forms the resisting force F4 in the direction toward the second connecting member 2 with respect to the first connecting member 1. As the volume of the negative pressure chamber continues to increase, the pressure inside the negative pressure chamber continues to decrease. When the pressure in the chamber reaches the threshold of the suction member, as the pressure required to open the suction member is large, the outside air slowly flows into the chamber. The negative pressure slowly decreases, and the resisting force F4 slowly decreases. Until the first connecting member 1 stops moving, the negative pressure chamber has a certain gas sealing property due to the sealing ring itself, and a certain negative pressure is still stored in the cavity, and the first connecting member 1 is supported and can be used for the next moving stroke.

Since the pressure required to open the pressure relief member 31 is less than the pressure to open the suction member 32, after the pressure in the negative pressure chamber exceeds a relatively small value of the atmospheric pressure during the ascending process, the pressure relief member 31 is opened. In the descending process, the suction member 32 is opened after the atmospheric pressure exceeds the pressure of the negative pressure chamber by a relatively large value. Therefore, the ascending process can exhaust the gas in time when the positive pressure is generated, so that the ascending process is smoother. The negative pressure stroke of the lowering process can be continued for a longer period of time, so that the obstruction force reaches the expected maximum peak value: an upward force F4 = P^{∗}S generated by the atmospheric strength P against the cross-sectional area S of the pressure relief member 31. It is also known that the assisting force F3 is generated by the negative pressure stored in the last descending stroke, and the resisting force F4 is the peak in one complete stroke, so the assisting force F3 is smaller than the resisting force F4.

Further, the pressure relief member 31 and the suction member 32 are respectively a second Y-ring and a first Y-ring; wherein the first Y-ring is disposed at an upper end of the negative pressure chamber and is fixed to the inner wall of the second connecting member 2 with the opening facing the inner side of the negative pressure chamber; the second Y-ring is disposed at a lower end of the negative pressure chamber and is fixed to the outer wall of the first connecting member 1 with the opening facing the outer side of the negative pressure chamber.

When the volume of the negative pressure chamber becomes smaller and the pressure in the negative pressure chamber increases, at first, the negative pressure chamber stores the residual negative pressure of the last movement, and the pressure inside the chamber is smaller than the external atmospheric pressure, a pressure difference is generated at the first Y-ring and the second Y-ring. Since the first Y-ring is disposed on the second connecting member 2, the resulting pressure difference acts on the second connecting member 2 in a direction opposite to the moving direction. The second Y-ring is disposed on the first connecting member 1, and the generated pressure difference acts on the first connecting member 1 in the same direction as the moving direction. During this period, the pressure difference generated by the remaining negative pressure forms the assisting force F3 in the direction away from the second connecting member 2 with respect to the first connecting member 1. Then, when the pressure is increased until the pressure in the negative pressure chamber is equal to the external atmospheric pressure, the assisting force F3 disappears. Then, the motion is continued until the pressure in the cavity is stronger than the external atmospheric pressure, so that the opening of the first Y-ring becomes larger, the first Y-ring and the outer side wall of the first connecting member 1 are better fitted, and the upper end of the negative pressure chamber always keeps sealed. The air pressure in the negative pressure chamber causes the opening of the second Y-ring to become smaller, so that the second Y-ring is separated from the inner side wall of the second connecting member 2, and the lower end of the negative pressure chamber is opened. The gas in the negative pressure chamber is poured into the second connecting member 2, and the pressure is balanced inside and outside, and thereafter the first connecting member 1 is supported by the frictional force of the first connecting member with the suction member 32, the second connecting member 2 and the retaining ring 33 on the first connecting member 1.

When the volume of the negative pressure chamber becomes larger, the pressure in the negative pressure chamber becomes smaller, and the air pressure in the negative pressure chamber begins to decrease from the initial pressure, which is equal to the external atmospheric pressure, to form a negative pressure; so that the first and second Y-rings have a pressure difference between the upper and lower sides. Since the first Y-ring is disposed on the second connecting member 2, the resulting pressure difference acts on the second connecting member 2 in the same direction as the moving direction. The second Y-ring is disposed on the first connecting member 1, and the generated pressure difference acts on the first connecting member 1 in a direction opposite to the moving direction. Therefore, the formation of the negative pressure chamber forms the resisting force F4 in the direction toward the second connecting member 2 with respect to the first connecting member 1. At the second Y-ring, as the volume of the negative pressure chamber continues to increase, the pressure in the negative pressure chamber decreases, and the external atmospheric pressure causes the opening of the second Y-ring to become larger, so that the second Y-ring and the inner wall of the connecting member 2 are better fitted, and the lower end of the negative pressure chamber is always kept in a sealed state. At the first Y-ring, when the pressure in the chamber reaches the threshold of the suction member 32, the pressure required to open the suction member is large, and the opening of the first Y-ring becomes smaller, so that the first Y-ring and the outer wall of the first connecting member 1 are separated by a small section, the upper end of the negative pressure chamber is opened, the outside air will slowly flow into the cavity, the negative pressure will slowly decrease, and the resisting force F4 will also slowly decrease. Until in the effective stroke, the first connecting member 1 stops moving, the first Y-ring and the second Y-ring have a certain gas sealing characteristic in the negative pressure chamber, and a certain amount of negative pressure is still stored in the cavity and supports the first connecting member 1 and is available for the next stroke.

Moreover, since the sealing area S of the second Y-ring is constant, the resistance force F4 first becomes larger as the negative pressure in the cavity becomes larger and larger, and then when the pressure in the negative pressure chamber reaches the threshold of the first Y-ring, as the pressure required to open the first Y-ring is large, the outside air slowly flows into the negative pressure chamber, and the resisting force F4 gradually becomes smaller and smaller. The sealing ring retains a certain amount of negative pressure until the first connecting member 1 moves stationary in the effective stroke. In this process, the peak of the resisting force F4 is also the upward force generated by the external atmospheric pressure on the cross-sectional area S of the pressure relief member 31. If a greater impediment is required, the design of the second Y-ring sealing surface area S can be changed. If a larger thrust is required, the first Y-ring threshold can be changed to maintain a stronger negative pressure. Therefore, the change of the entire movement stroke, the assisting force and the obstruction force are synchronized with the operation, and are linearly related, so the operating force is relatively uniform.

### Embodiment 2

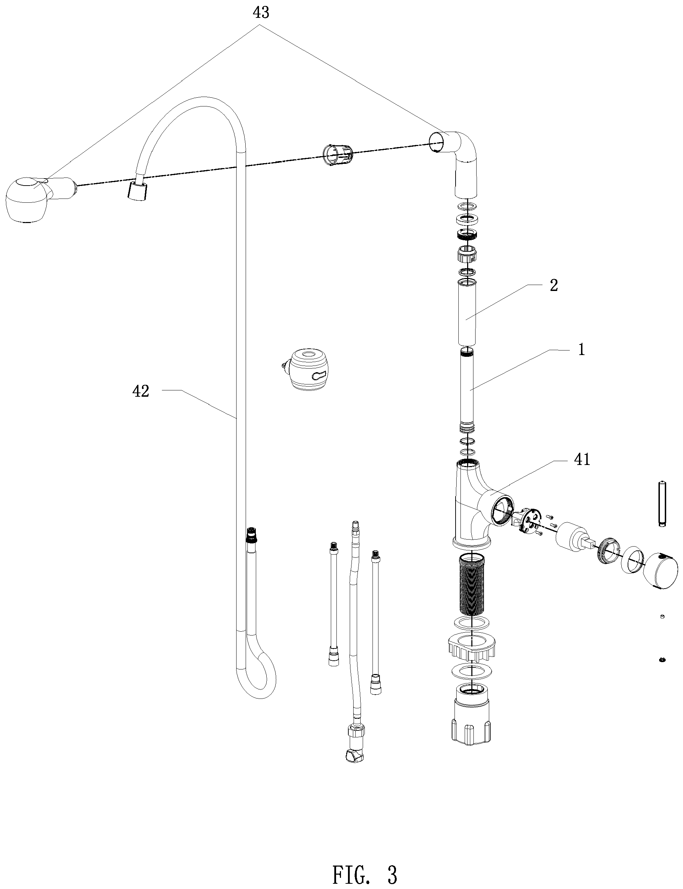

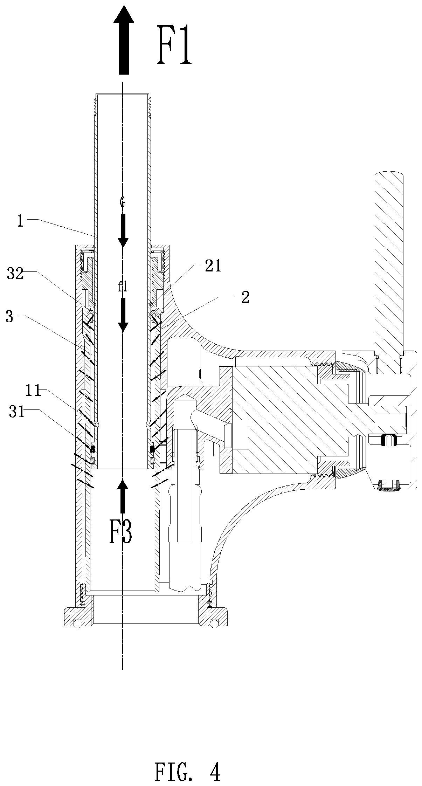

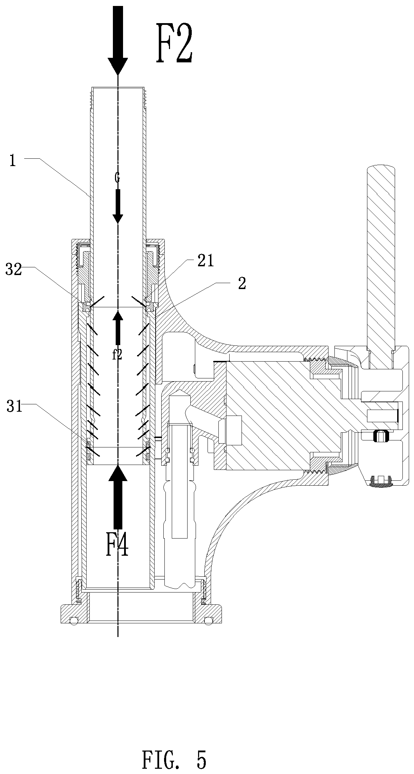

Referring to FIG. 3-5, a height-adjustable faucet in the present embodiment is equipped with the lifting mechanism as described above. The difference from the embodiment 1 is that the first connecting member 1 is specifically selected as the movable tube 1, and the second connecting member 2 is specifically selected as the fixed tube 2. The rest of the structure of the lifting mechanism is the same as that of Embodiment 1, and will not be described again.

In this embodiment, the inner side wall of the fixed tube 2 is provided with a positioning convex point 21, and the outer side wall of the movable rod 1 is provided with a positioning groove 11; when the movable rod 1 moves to the highest point along the axial direction, the positioning convex point 21 is embedded in the positioning groove 11. Thus, when the user operates the movable rod 1 to the highest position, there is obvious directivity, which prompts the user. The convenience of the user operation is further increased, and the user is prevented from excessively pulling the movable tube. The positioning convex point 21 can be directly formed on the inner side wall of the fixed tube 2 or on a separate part and then embedded in the fixed tube 2.

The faucet in this embodiment is an integrated faucet, that is, the faucet and the switch for operating the faucet are disposed together. It comprises a faucet mount 41, a water outlet hose 42, and a water outlet faucet 43; wherein the faucet mount 41 is mounted on an upper surface of the mounting surface; the fixed tube 2 is fixedly disposed in the faucet mount 41, and the upper end of the movable tube 1 is fixedly connected to the water outlet faucet 43, and the water outlet hose 42 is fixedly connected to the water outlet of the water outlet faucet 43 after passing through the movable tube 1. Therefore, the user only needs to push and pull the faucet 43 to pull the movable tube 1 down or up.

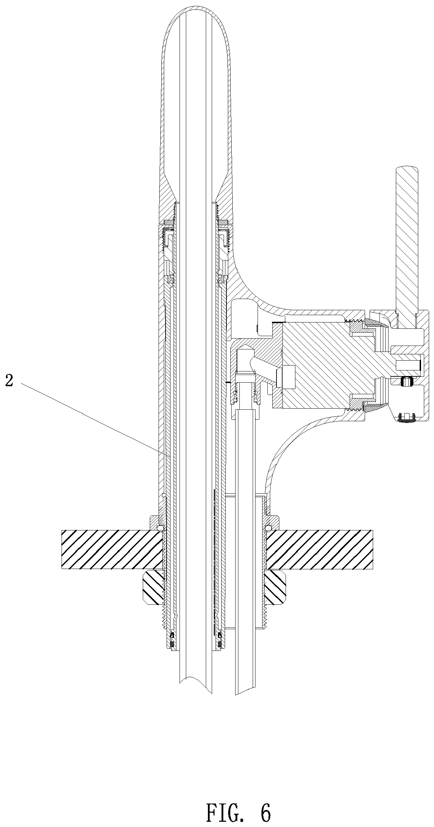

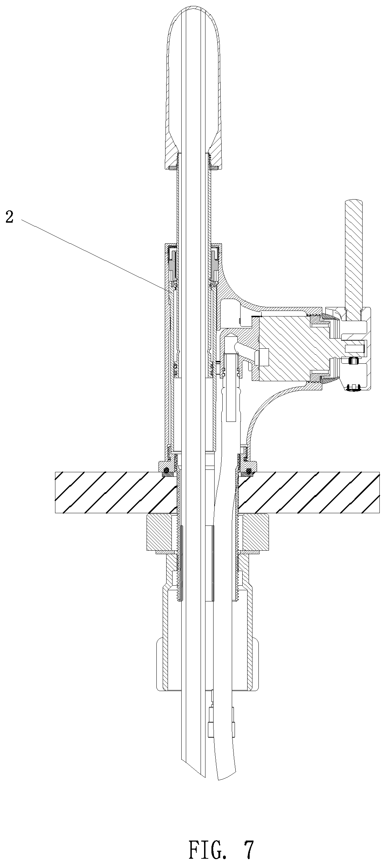

With further reference to FIGS 6 and 7, in this embodiment, the lifting mechanism is installed in two ways, one of which is that the fixed tube 2 is entirely above the mounting surface, and the other is that a part of the fixed tube 2 is located above the mounting surface, and the other part is located below the mounting surface.

### Embodiment 3

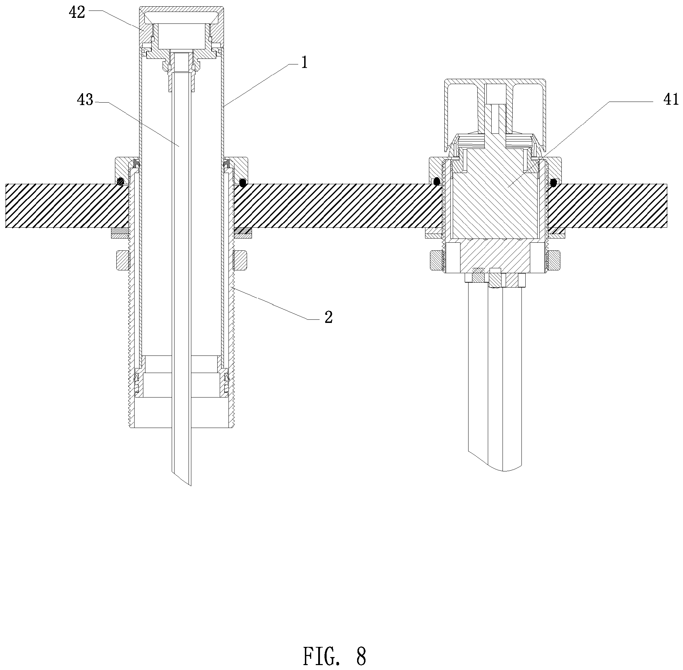

Referring to FIG. 8, the difference between this embodiment and the embodiment 2 is that the faucet is a split type faucet, that is, the outlet control unit of the faucet and the faucet are separately disposed. The faucet comprises a water outlet control unit 41, a water outlet faucet 42, and a water outlet hose 43; wherein the water outlet control unit 41 and the water outlet faucet 42 are separately disposed on the upper surface of the mounting surface; the mounting surface has a hole for mounting the fixed tube 2, the upper end of the movable tube 1 is fixedly connected to the water outlet faucet 42, and the water outlet hose 43 is fixedly connected to the water inlet of the water outlet faucet 42 after passing through the movable tube 1.

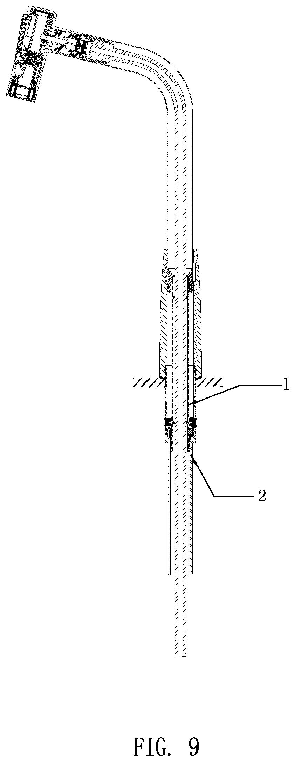

In this embodiment, the fixed tube 2 can be installed in a hidden manner, that is, the fixed tube 2 as a whole is not exposed on the upper surface of the mounting surface. This installation method is more concise, as shown in FIG. 9. In addition, it is also possible to select the entire fixed tube 2 below the mounting surface. At this time, when the movable tube 1 is in the initial position, the height of the faucet is the highest.

Therefore, the present invention can be applied to both the integrated faucet and the split faucet, and can be exposed to the mounting surface or hidden in the mounting surface. The compatibility is very good, and it can be perfectly adapted to various drawing faucets and shampoo faucets on the market.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A lifting mechanism, wherein comprising: a first connecting member and a second connecting member; a part of the first connecting member is inserted into the second connecting member and forms a movable connection with the second connecting member in the axial direction; and
a force balancing member disposed on the first connecting member and the second connecting member; when the first connecting member is moved by an external force F1 in a direction away from the second connecting member, the force balancing member provides the first connecting member with an assisting force in the same direction as the moving direction of the first connecting member; when the first connecting member is moved by an external force F2 in a direction approaching the second connecting member, the force balancing member provides the first connecting member with a resisting force in the opposite direction of movement of the first connecting member.

2. The lifting mechanism according to claim 1, wherein the forces F1, F2 that drives the movement of the first connecting member by the assisting force and the resisting force are substantially equal.

3. The lifting mechanism according to claim 1 or 2, wherein the force balancing member is a negative pressure chamber disposed between an outer side wall of the first connecting member and an inner side wall of the second connecting member, the negative pressure chamber has a pressure relief member at the lower end along the axial direction and a suction member at the upper end along the axial direction; the pressure relief member is linked to the first connecting member, the suction member is fixedly connected to the second connecting member, and the pressure required to open the pressure relief member is smaller than the pressure required to open the suction member.

4. The lifting mechanism according to claim 3, wherein when the first connecting member moves in a direction approaching the second connecting member, the pressure relief member moves toward a direction away from the suction member, the volume of the negative pressure chamber becomes larger, the pressure in the chamber is reduced, and the force balancing member provides a resisting force to the first connecting member in a direction opposite to the moving direction of the first connecting member.

5. The lifting mechanism according to claim 3, wherein when the first connecting member moves in a direction away from the second connecting member, the pressure relief member moves toward a direction approaching the suction member, the volume of the negative pressure chamber becomes smaller, the air pressure in the negative pressure chamber increases, and the force balancing member provides the first connecting member with an assisting force in the same direction as the moving direction of the first connecting member; when the pressure in the negative pressure chamber reaches the pressure relief threshold, the pressure relief member opens, the gas in the negative pressure chamber flows into the second connecting member, and the force balancing member has no force.

6. A lifting mechanism for a sanitary device, wherein comprising: a fixed tube and a movable tube, a part of the movable tube is inserted into the fixed tube and forms a movable connection with the fixed tube along the axial direction; and a force balancing member disposed on the movable tube and the fixed tube; when the movable tube is moved by an external force F1 in a direction away from the fixed tube, the force balancing member provides the movable tube with an assisting force in the same direction as the movement of the movable tube; when the movable tube is moved by an external force F2 in the direction approaching the fixed tube, the force balancing member provides the movable tube with a resisting force in a direction opposite to the moving direction of the movable tube.

7. The lifting mechanism for a sanitary device according to claim 6, wherein the forces F1, F2 that drives the movement of the movable tube by the assisting force and the resisting force are substantially equal.

8. The lifting mechanism for a sanitary device according to claim 6 or 7, wherein the force balancing member is a negative pressure chamber disposed between an outer side wall of the movable tube and an inner side wall of the fixed tube, the negative pressure chamber has a pressure relief member at the lower end along the axial direction and a suction member at the upper end along the axial direction; the pressure relief member is linked to the movable tube, the suction member is fixedly connected to the fixed tube, and the pressure required to open the pressure relief member is smaller than the pressure required to open the suction member.

9. The lifting mechanism for a sanitary device according to claim 8, wherein when the movable tube moves in a direction approaching the fixed tube, the pressure relief member moves toward a direction away from the suction member, the volume of the negative pressure chamber becomes larger, the pressure in the chamber is reduced, and the force balancing member provides a resisting force to the movable tube in a direction opposite to the moving direction of the movable tube.

10. The lifting mechanism for a sanitary device according to claim 8, wherein when the movable tube moves in a direction away from the fixed tube, the pressure relief member moves toward a direction approaching the suction member, the volume of the negative pressure chamber becomes smaller, the air pressure in the negative pressure chamber increases, and the force balancing member provides the movable tube with an assisting force in the same direction as the moving direction of the movable tube; when the pressure in the negative pressure chamber reaches the pressure relief threshold, the pressure relief member opens, the gas in the negative pressure chamber flows into the fixed tube, and the force balancing member has no force.

11. The lifting mechanism for a sanitary device according to claim 8, wherein the pressure relief member and the suction member are respectively a second Y-ring and a first Y-ring; the first Y-ring is disposed at an upper end of the negative pressure chamber and fixed to the inner side wall of the fixed tube, and the opening faces the inner side of the negative pressure chamber; the second Y-ring is disposed at the lower end of the negative pressure chamber and is fixed to the outer side wall of the movable tube, and the opening faces the outer side of the negative pressure.

12. The lifting mechanism for a sanitary device according to claim 8, wherein the inner side wall of the fixed tube is provided with a positioning point, and the outer side wall of the movable tube is disposed with a positioning groove, when the movable tube moves to the highest point along the axial direction, the positioning point is embedded in the positioning groove.

13. A height adjustable water outlet device, wherein the water outlet device is equipped with the lifting mechanism according to any one of claims 6 to 12.

14. The height adjustable water outlet device according to claim 13 , wherein the water outlet device is an integrated faucet, which comprises a faucet mount, an outlet hose and an outlet faucet; wherein the faucet mount is mounted on the upper surface of a mounting surface; the fixed tube is fixedly disposed in the faucet mount, the upper end of the movable tube is fixedly connected with the outlet faucet, and the outlet hose is fixed to an inlet of the outlet faucet after passing through the movable tube.

15. The height adjustable water outlet device according to claim 14 , wherein the fixed tube is integrally located above the mounting surface, or a part of the fixed tube is located above the mounting surface, and another part is located below the mounting surface; or the fixed tube is entirely located below the mounting surface.

16. The height adjustable water outlet device according to claim 13 , wherein the water outlet device is a split type faucet, which comprises an outlet control component, an outlet faucet and an outlet hose; the water outlet control component and the outlet faucet are separately disposed on the upper surface of the mounting surface; the mounting surface has a hole for mounting the fixed tube, the upper end of the movable tube is fixedly connected with the outlet faucet, and the outlet hose is fixedly connected to an of the outlet faucet after passing through the movable tube.

17. The height adjustable water outlet device according to claim 16, wherein the fixed tube is not exposed to the upper surface of the mounting surface as a whole.
